# EUROPEAN PATENT APPLICATION

(11) **EP 4 075 715 A1**
(43) Date of publication of application: **19.10.2022**
(21) Application number: 22168245.3
(22) Date of filing: 13.04.2022
(51) Int. Cl.: H04L 9/00, H04L 9/40

(54) **A MULTILAYERED BLOCKCHAIN NETWORK AND A METHOD FOR PERFORMING AN EVENT IN A MULTILAYERED BLOCKCHAIN NETWORK**

(30) Priority: 14.04.2021 GB 202105283
(71) Applicant: Continental Automotive Technologies GmbH, 30165 Hannover (DE)
(72) Inventor: Chew, Adam, 339780 Singapore (SG); Tay, Nelsie, 339780 Singapore (SG); Agus, Chandra Tatianto, 339780 Singapore (SG); Peng, Bin, 339780 Singapore (SG); Lim, Chu Yao, 339780 Singapore (SG); Lim, Mei Qing, 339780 Singapore (SG); Leong, Choi Chee, 339780 Singapore (SG); Saradindubasu, Saptarshi, 339780 Singapore (SG)
(74) Representative: Continental Corporation

(57) **Abstract**

A method for performing an event in a multi-layered blockchain network includes sending a request for an event, from a source to a secondary blockchain network including a plurality of nodes, using a first smart contract stored on the source blockchain network. The method includes receiving the request and updating details of the request in each node using a second smart contract stored on the secondary blockchain network. The method includes identifying by the second smart contract, node(s) that are associated with the event, based on the received request. The method includes receiving consent information from each node of the identified node(s), by the second smart contract, sending a response to the source blockchain network based on the received consent information from each node of the identified node(s), by the second smart contract. The method includes performing the event on the source blockchain network based on the response.

## Description

### TECHNICAL FIELD

The present disclosure is generally related to a multilayered blockchain network and a method for performing an event in a multilayered blockchain network.

### BACKGROUND

Blockchain technology is most widely known as the technology behind popular cryptocurrencies, such as Bitcoin. A blockchain creates a history of data deposits, messages, or transactions in a series of blocks. For some transactions, it may be desirable to restrict the viewing of details to selected nodes in the blockchain network. However, in a blockchain network, the data associated with the transactions may be accessible to all the nodes of the blockchain network.

The information disclosed in this background of the disclosure section is only for enhancement of understanding of the general background of the invention and should not be taken as an acknowledgement or any form of suggestion that this information forms the prior art already known to a person skilled in the art.

### SUMMARY

Aspects of the present disclosure provides a method and a system for performing an event in a multilayered blockchain network.

One aspect of this disclosure provides a computer-implemented method for performing an event in a multilayered blockchain network. The method includes sending a request for an event, from a source blockchain network to a secondary blockchain network, using a first smart contract stored on the source blockchain network. The secondary blockchain network includes a plurality of nodes. The method further includes receiving the request and updating details of the request in each node of the plurality of nodes, using a second smart contract stored on the secondary blockchain network. The method further includes identifying by the second smart contract, one or more nodes of the plurality of nodes that are associated with the event, based on the received request. The method further includes receiving consent information from each node of the identified one or more nodes, by the second smart contract. The method further includes sending a response to the source blockchain network based on the received consent information from each node of the identified one or more nodes, by the second smart contract. The method further includes performing the event on the source blockchain network based on the response.

Another aspect of the disclosure provides a multi-layered blockchain network. The multi-layered blockchain network includes a source blockchain network having a first smart contract stored thereon and a secondary blockchain network. The secondary blockchain network includes a plurality of nodes and has a second smart contract stored thereon. The first smart contract is configured to send a request for an event, from the source blockchain network to the secondary blockchain network. The second smart contract is configured to receive the request and update details of the request in each node of the plurality of nodes, and further configured to identify one or more nodes of the plurality of nodes that are associated with the event based on the received request. The second smart contract is further configured to receive consent information from each node of the identified one or more nodes, and further configured to send a response to the source blockchain network based on the received consent information from each node of the identified one or more nodes. The source blockchain network is configured to perform the event based on the response.

Embodiments of the disclosure according to the above-described method and multi-layered blockchain network may bring about several advantages. The approval process may be performed on the secondary blockchain network, by a selection of intended nodes, while the event may still be performed on the source blockchain network to reap the benefits of having the event performed across a larger blockchain network. The decision made by each intended node using the consensus mechanism(s) may remain confidential within the secondary blockchain network, while the decision resulting from the consensus mechanism(s) may be provided to the source or other public blockchain networks. Hence, the above-described method and blockchain network restrict data accessed by other nodes to maintain security in the transactions.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**Figs.la-lb** illustrate an exemplary environment of a multilayered blockchain network according to one embodiment of the present disclosure.
**Fig.2** shows an exemplary method for performing an event according to one embodiment of the present disclosure.
**Fig.3** shows a flowchart illustrating a method for performing an event according to one embodiment of the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the specific forms disclosed, but on the contrary, the disclosure is to cover all modifications, equivalents, and alternative falling within the scope of the disclosure.

The terms "comprises", "comprising", "includes", "including" or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

In the following detailed description of the embodiments of the disclosure, reference is made to the accompanying drawings that form a part hereof, and in which are shown by way of illustration of embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

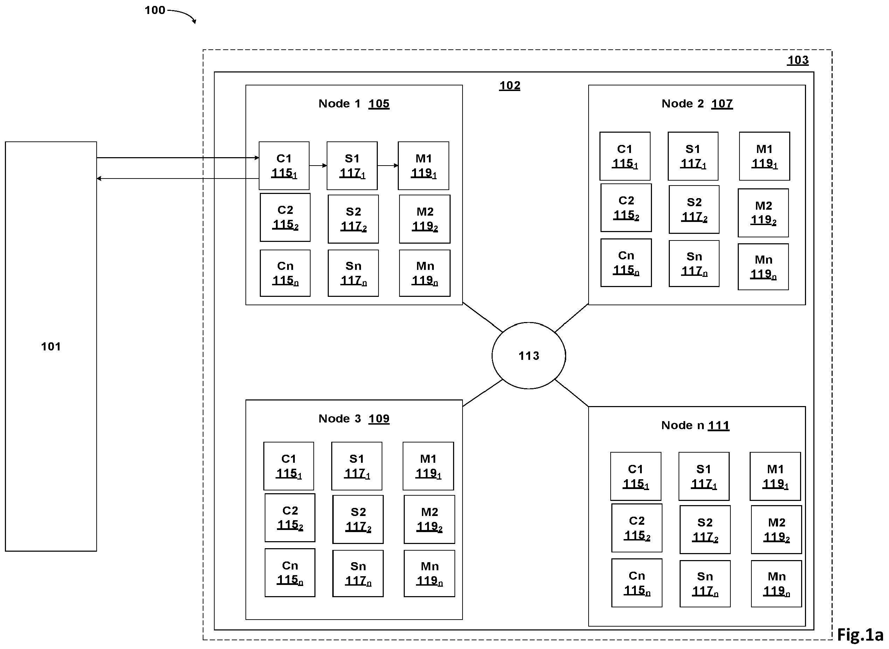

**Figs.1a-1b** illustrate an exemplary environment of a multilayered blockchain network according to one embodiment of the present disclosure.

As shown in **Fig.1a****,** the multilayered blockchain network 100 may include a source blockchain network 101 and a secondary blockchain network 103 of an organization. The source blockchain network 101 may be a private blockchain network or a public blockchain network. Each of the source blockchain network 101 and the secondary blockchain network 103 may include a respective plurality of interconnected nodes. Each node of the plurality of interconnected nodes may include a processor, such as a computer. The secondary blockchain network 103 may be a private blockchain network. As an example, the source blockchain network 101 may be any one of Ethereum wallet, Ethereum Smart Contract, Bitcoin wallet, Internet of Things [IOTA] smart contract and IOTA wallet. In an embodiment, an event may be initiated from the source blockchain network 101. As an example, the event may be a request for payment, verification of transaction or updating of data. As an example, the event may also be associated with transactions from Bitcoin wallet, IOTA wallet or Ethereum wallet. The secondary blockchain network 103 may include one or more interconnected nodes [also referred to as nodes] in a Customized Secondary Consensus Layer (CSCL) 102. The CSCL 102 provides a flexible means wherein crucial decision to perform an action associated with the event are performed and ensures that only intended nodes process, and thereby determine the decision. The intended nodes are the nodes that are allowed to perform the action corresponding to the event and provide response about the event. In an embodiment, the secondary blockchain network 103 may be created in real-time based on the event. Once the secondary blockchain network 103 is created, one or more smart contracts, one or more communicators and one or more consensus mechanisms are added in the secondary blockchain network 103. In an embodiment, the secondary blockchain network 103 may be pre-configured. The secondary blockchain network 103 may be created for the purpose of deciding whether the event which is initiated at the source blockchain network 101 should be approved or not. In an exemplary scenario, the secondary blockchain network 103 may include node 1 105 to node n 111 which are interconnected in the secondary blockchain network 103.

Each of the one or more interconnected nodes may include one or more smart contracts, one or more communicators and one or more consensus mechanisms. As an example, the node1 105 may include one or more communicators, C1 115ₗ to Cn 115ₙ, one or more smart contracts S1 117ₗ to Sn 117ₙ and one or more consensus mechanisms M1 119ₗ to Mn 119ₙ. Similarly, the node 2 107 to node n 111 may include one or more communicators (115ₗ to Cn 115ₙ), one or more smart contracts (117ₗ to 117ₙ) and one or more consensus mechanisms (119ₗ to 119ₙ) as shown in **Fig.1a****.** Each communicator and each consensus mechanism may be logic pre-programmed to execute its respective function. The one or more communicators (115ₗ to 115ₙ) and the one or more consensus mechanisms (119ₗ to 119ₙ) may also include smart contracts. The smart contracts are pre-programmed logic which may store variables associated with transactions and update the variables associated with transactions in a distributed ledger of the secondary blockchain network 103. The smart contract may be computer-executable instructions which can cause a processor or a controller to enforce an agreement. The smart contract may be used to represent the agreement between parties including the node 1 105, node 2 107 to node n 111. The smart contract may include policies, such as according to the method disclosed herein, which can complete a transaction between the parties. Based on the policies, the smart contract may make decisions.

The variables may include identifiers of the event, request and/or the transaction. As an example, variables could be request id, quotation id, transaction id and the like. Further, if the Ethereum contract is considered, the variable is an article which may be represented as below:

```
 Article quotations = [
  {
    quotation_id: 1,
    amount: SGD 1,000,000,
    currency: ETH 973,
    date: 10 Apr 2021,
    status: 'pending approval'
    ....
  }
  ...
]
```

In an embodiment, for every new event such as a quotation which comes in, the smart contract creates a new quotation and adds on to the existing list on the distributed ledger. In an embodiment, for every update, the smart contract will search within the existing list using the identifier(s). If the event already exists in the list, the smart contract updates the list with the consent information from the consensus mechanism of each intended node. If the event is new, the smart contract updates the list accordingly by creating a new event, including a new event identifier and business logic, such as logic according to the method disclosed herein. Also, for any changes made to the list, the distributed ledger or secondary blockchain 103 may undertake both verification of the blockchain, such as using encryption keys or other verification methods, and verification of the business logic.

The disclosed smart contracts may be programmed to execute business logic or processes associated with conducting business in the organization. The one or more communicators (115ₗ to 115ₙ) and one or more consensus mechanisms (119ₗ to 119ₙ) may also include smart contracts. In an embodiment, any request to make changes to the distributed ledger is considered as an event.

In an embodiment, the source blockchain network 101 may be a private blockchain network or a public blockchain network. The source blockchain network 101 may include a smart contract [referred to as Main smart contract (MS) not shown in **Fig.1a****].** In this scenario, the MS of the source blockchain network 101 may communicate with the smart contract of the secondary blockchain network 103 of the organization for processing the event related to any transaction. In an embodiment, the smart contract of the source blockchain network 101 may have access to private encryption key of the smart contract of the CSCL 102 and the smart contract of the CSCL 102 may have encryption key of the smart contract of the source blockchain network 101 for accessing data. The communication between the MS and the CSCL 102 may be performed using Application Programming Interface (API) calls or Web Socket connection. However, one or more software applications other than the MS may also be used for sending a request associated with the event to the secondary blockchain network 103. In another embodiment, the request for processing the event may also be provided by a user to the smart contract of the secondary blockchain network 103.

In another exemplary scenario, blockchain platform specific capabilities to CSCL 102 communication may also be used for sending the request to the smart contract of the secondary blockchain network 103 for processing the event. As an example, the source blockchain network 101 may comprise federated blockchains which may maintain and expose a Message Queuing Telemetry Transport (MQTT) like mechanism with the source blockchain network 101. Therefore, instead of the CSCL 102 waiting for the source blockchain network 101 to trigger an event, the CSCL 102 may actively listen to the source blockchain network 101 for events and trigger its process accordingly. Thus, in some embodiments, the request received by the CSCL 102 may originate from source blockchain network 101, a smart contract or software application(s) of the source blockchain network 101, a user of the source blockchain network 101, and/or one or more events or messages from the source blockchain network 101.

In an embodiment, each of the one or more communicators (115ₗ to 115ₙ) may be configured for receiving the request corresponding to one or more events from the source blockchain network 101. As an example, the C1 115ₗ of the interconnected node 1 105 may be configured to communicate with the Ethereum Smart Contract/Wallet. The C2 115₂ of the interconnected node 1 105 may be configured to communicate with the IOTA smart contract or the IOTA wallet and the Cn 115ₙ of the interconnected node 1 105 may be configured to communicate with Bitcoin wallet.

As an example, each of the one or more communicators (115ₗ to 115ₙ) may receive the request from the source blockchain network 101. The communication between the source and the secondary blockchain network 103 happens through Application Programming Interfaces (APIs), wherein it includes predefined inputs and predefined outputs. For example, when the request is received by each of the one or more communicators, the pre-defined input may be for example:

```
 {
 origin: Ethereum SC,
 type: VendorTransaction,
 consensus: [
  Voting,
  Scheduled
 ],
 payload: {
 . } ... }
```

Each of the one or more communicators (115₁ to 115ₙ) may receive the request from the source blockchain network 101. But one of the one or more communicators (115₁ to 115ₙ) is configured to act upon the request based on one of type of event and the type of source which is pre-defined in the API. For example, the predefined type of event is "vendor transaction" and the predefined type of source is "Ethereum SC" as per the API. Therefore, only the communicator C1 115₁ will act upon the request corresponding to the event.

Each of the one or more communicators (115₁ to 115ₙ) may store information of one or more events and corresponding one or more smart contracts (117₁ to 117ₙ) to be triggered for receiving the request associated with the event. The one or more communicators (115₁ to 115ₙ) allow for secure and confidential transactions to be performed on one private chain, such as secondary blockchain network 103, instead of multiple private chains for transactions from different sources.

As an example, consider the S1 117₁ of the interconnected node 1 105 which may be configured to process payment request. The S2 117₂ of the interconnected node 1 105 may be configured to process customer warranty registration and the Sn 117ₙ of the interconnected node 1 105 may be configured to process customer insurance processing. In an embodiment, each of the one or more communicators (115₁ to 115ₙ) may translate information to be readable/understandable by the one or more smart contracts (117₁ to 117ₙ) based on information contained in the request associated with the event. As an example, the Cn 115ₙ may translate event associated with Bitcoin to a JavaScript Object Notation (JSON) format which may be acceptable by the Sn 117ₙ of the secondary blockchain network 103.

In an embodiment, the event associated with a transaction may be triggered at the source blockchain network 101. The source blockchain network 101 may send a request associated with the event to the secondary blockchain network 103. Each of the one or more interconnected nodes in the private blockchain may receive the request and details of the request is updated in each of the one or more interconnected nodes. One of the interconnected nodes may initiate the processing of the request upon receiving the request. The request may be received through the communicator.

In an embodiment, each of the one or more communicators (115₁ to 115ₙ) may be configured for receiving the request corresponding to one or more events. The one of one or more communicators (115₁ to 115ₙ) configured to act upon the request corresponding to the event is identified based on one of type of event and the type of the source. As an example, the C1 115₁ may be configured to receive request associated with event from Ethereum wallet. The C2 115₂ may be configured to receive request associated with event from the IOTA wallet and Cn 115ₙ may be configured to receive request associated with event from the Ethereum smart contract. Based on one of the type of event and the type of source, the corresponding communicator may act upon the request and identify the smart contract in the CSCL 102 for processing the request. Each of the one or more communicators (115₁ to 115ₙ) stores information of one or more events and corresponding one or more smart contracts (117₁ to 117ₙ) to be identified for processing the request.

As an example, the event from the Ethereum wallet may be provided to the S1 117₁, the event from the IOTA wallet may be provided to the S2 117₂ and the event from the Ethereum smart contract may be provided to the Sn 117ₙ. Based on the event, the corresponding smart contract may be identified by the communicator for processing the request corresponding to the event. Once the smart contract is selected [one of the one or more smart contracts (117₁ to 117ₙ) among the one or more smart contracts (117₁ to 117ₙ) in the node 1 105], the selected smart contract may identify one or more intended nodes among the one or more interconnected nodes in the secondary blockchain network 103. The intended nodes to be identified for an event may be preconfigured. Alternatively, the selected smart contract may match one or more properties of the event with corresponding one or more properties in each of the one or more interconnected nodes.

As an example, the event may be "transfer of payment". So, the payment related properties, as an example, type of payment, available balance may be verified. There may be two interconnected nodes, interconnected node 1 and interconnected node 2 in the secondary blockchain network 103. The interconnected node 1 may be associated with user verification so user related properties such as user name, address and identification are verified. Therefore, the payment related properties such as type of payment and available balance may not match. The interconnected node 2 may be associated with payment verification so payment related properties such as type of payment and available balance matches with the event. Hence the interconnected node 2 may be selected by the smart contract for performing the action corresponding to the event.

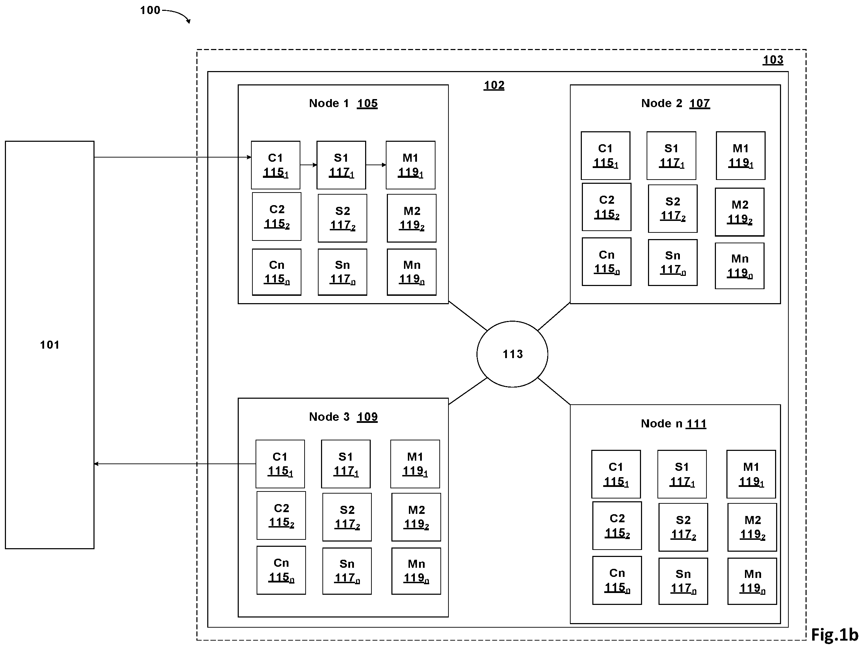

As an example, the one or more intended nodes may be node 2 107 and node 3 109 among the one or more interconnected nodes. Once the one or more intended nodes are identified by the selected smart contract, the selected smart contract, in one embodiment, may receive consent information from each of the one or more intended nodes upon performing the action using one of one or more consensus mechanisms (119₁ to 119ₙ) of the secondary blockchain network 103. The one or more consensus mechanisms (119₁ to 119ₙ) may include, but not limited to, a voting mechanism or a scheduling mechanism. In another embodiment, the selected smart contract may be capable to process the event without receiving consent information from the one or more intended nodes. In this scenario, the selected smart contract is configured with the necessary business logic to process the event. Once the event is processed, in one embodiment, the selected smart contract which processed the request may provide through the communicator a response to the request to the source blockchain network 101 for performing the event based on the response as shown in **Fig.1a****.** The response associated with the event may be updated in each of the intended nodes. So, in another embodiment, any other intended nodes, for example, node 3 109 in the secondary blockchain network 103 may provide the response to the source blockchain network 101 as shown in **Fig.1b****.** Data associated with processing of the event or undertaking of the consensus mechanism(s) may remain confidential within the secondary blockchain network 103, while the response only may be provided to the source blockchain network 101. So, in the present disclosure, only the intended nodes are allowed to perform changes to the distributed ledger and hence the confidential information associated with the event are stored in the secondary blockchain network 103 while the other information such as the decision related to the transaction is made accessible to the source blockchain network 101.

In an embodiment, one or more additional smart contracts may be deployed in the secondary blockchain network 103, or the selected smart contract for the event which received the event may be updated, when the one of one or more smart contracts (117₁ to 117ₙ) is outdated for processing the request or one or more updates are available for processing the request.

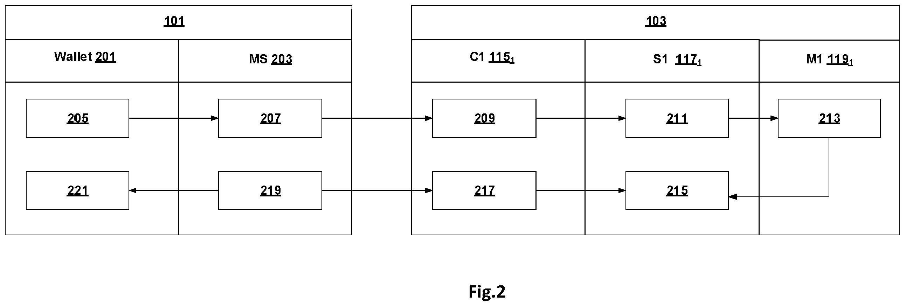

**Fig.2** shows an exemplary method for performing an event according to one embodiment of the present disclosure.

As an example, a customer may wish to claim for insurance amount from an insurance company. In this scenario, the insurance company may validate the claim made by the customer for providing reimbursement. The multilayered blockchain network comprising the source blockchain network 101 and the secondary blockchain network 103 may be implemented in the insurance company for validating the insurance and providing reimbursement. The source blockchain network 101 in this exemplary scenario may be a public blockchain network. The source blockchain network 101 may include a wallet 201 at which the event is triggered by the customer for payment transfer. The source blockchain network 101 includes a smart contract (MS 203). At first, the customer may request for the reimbursement and await payment in the wallet 201 at block 205. So, the event in this scenario is transfer of payment. The payment request associated with the event may be provided to the smart contract of a public chain network of the insurance company.

In an embodiment, the transaction may also arise directly from the wallet 201 and provided to the secondary blockchain network 103 of the insurance company and hence the MS 203 may be surpassed. At block 207, the smart contract processes the request and initiates the secondary blockchain network 103 which comprises one or more interconnected nodes. Each of the one or more interconnected nodes comprises one or more communicators (115₁ to 115ₙ), one or more smart contracts (117ₗ to 117ₙ) and one or more consensus mechanisms (119ₗ to 119ₙ).

As an example, the interconnected node 1 105 as illustrated in **Fig.1a** which includes C1 115₁, C2 115₂ and Cn 115ₙ, smart contract S1 117₁, S2 117₂ and Sn 117ₙ and consensus mechanism M1, 119₁, M2 119₂, and Mn 119ₙ may be considered for further explanation of this exemplary scenario. The interconnected node 1 105 may be configured to check the transaction details against laws and policies. The interconnected node 2 107 may be configured to verify the claim details. The interconnected node 3 109 may be configured to process payment related to the transaction. The request associated with the event may be received by all the interconnected nodes. Each of the one or more interconnected nodes updates distributed ledger upon receiving the request in the secondary blockchain network 103. As an example, the C1 115ₗ of the interconnected node 1 105 receives the request at block 209 as illustrated in **Fig. 2****.**

In an embodiment, communicator of CSCL 102 is configured to translate information to be readable/understandable from the intended node point of view. For example, communicator translates Bitcoin related event in XML format to a JSON format acceptable by smart contract of CSCL 102. Similarly, communicator translates Smart contract of CSCL 102 decision in JSON format to an XML format acceptable by Bitcoin-styled smart contract. The C1 115₁ identifies the S1 117₁ which is configured to process the request corresponding to the event and provides the event to the S1 117₁ for processing the request at block 211.

Upon receiving the request, the S1 117₁ creates a record in the distributed ledger of the secondary blockchain network 103 for the consensus process. The S1 117₁ identifies one or more intended nodes for performing the action corresponding to the event. The S1 117₁ identifies the intended nodes as interconnected node 2 107 and interconnected node 3 109. Thereafter, the S1 117₁ initiates a consensus mechanism. As an example, the consensus mechanism initiated may be a voting mechanism. So, the intended nodes may perform the action corresponding to the event at block 213 and upon performing the action, provide consent information to the S1 117₁. As an example, the interconnected node 2 107 verifies the claim policy and the interconnected node 3 109 verifies the payment amount claimed. Upon completion of these processes, the interconnected node 2 107 and interconnected node 3 109 respond with consent information to the S1 117₁ at block 215. The S1 117₁ at block 215 processes the consent information and provides a response to the communicator C1 115₁. The communicator C1 115₁ at block 217 processes the response to a format which is acceptable by the smart contract MS and provides the response to the MS 203. Based on the response, the MS 203 at block 219 makes the payment for the insurance claim into the wallet 201 at block 221. Also, based on the decision from the S1 117₁ the payment may be made directly into the wallet 201 by surpassing the MS 203.

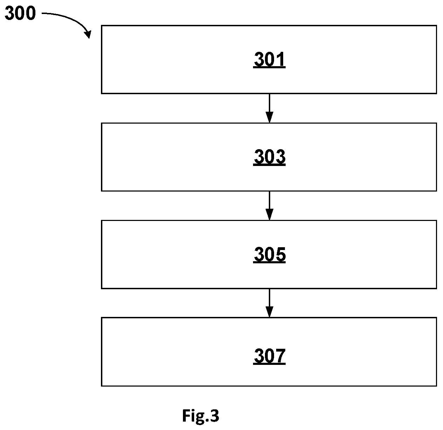

**Fig.3** shows a flowchart illustrating a method for performing an event in a multilayered blockchain network according to one embodiment of the present disclosure. The method may perform the event securely.

In an embodiment, **Fig.3** shows a flowchart 300 illustrating one or more steps for performing an event in a multilayered blockchain network.

In **step 301,** the method identifies one of one or more smart contracts (117₁ to 117ₙ) configured to process a request corresponding to the event from a source blockchain network 101 through one of one or more communicators (115₁ to 115ₙ). The one of one or more communicators (115₁ to 115ₙ) which is configured to act upon the request corresponding to the event is identified based on one of type of event and type of the source blockchain network 101. The secondary blockchain network 103 may include one or more interconnected nodes, wherein each of the one or more nodes may include one or more smart contracts (117₁ to 117ₙ), one or more communicators (115₁ to 115ₙ) and one or more consensus mechanisms (119ₗ to 119ₙ). As an example, the event may arise from Ethereum wallet, Ethereum smart contract, IOTA wallet or Bitcoin wallet. Each of the one or more communicators (115₁ to 115ₙ) are configured for receiving the request corresponding to one or more events from the source blockchain network 101. Each of the one or more communicators (115₁ to 115ₙ) also stores information of one or more events and corresponding one or more smart contracts (117ₗ to 117ₙ) to be identified for receiving the request. So, the communicator identifies the one of the one or more smart contracts (117₁ to 117ₙ) process the request corresponding to the event from the source blockchain network 101 based on the event.

In **step 303,** the method causes one of the one or more smart contracts (117₁ to 117ₙ) to identify one or more intended nodes, among the one or more interconnected nodes, associated with the event for performing the action. The intended nodes are the nodes that are entitled to authorize the transaction associated with the event.

In **step 305,** the method causes one of the one or more smart contracts (117ₗ to 117ₙ) to receive consent information from each of the one or more intended nodes upon performing the action using one of one or more consensus mechanisms (119₁ to 119ₙ) of the secondary blockchain network 103. As an example, the consensus mechanism may be a voting mechanism or a scheduling mechanism. The one or more consensus mechanisms (119₁ to 119ₙ) may be used by the intended nodes for providing the consent upon processing the event. The consent may be approval of the transaction or disapproval of the transaction.

In **step 307,** the method causes either the one of the one or more smart contracts (117₁ to 117ₙ) or other intended nodes in the secondary blockchain network 103 for providing a response based on the consent information to the source blockchain network 101. The source blockchain network 101 may perform the event based on the response.

According to an embodiment, a method for performing an event in a multi-layered blockchain network includes sending a request for an event, from a source blockchain network 101 to a secondary blockchain network including a plurality of nodes, using a first smart contract stored on the source blockchain network. The method further includes receiving the request and updating details of the request in each node of the plurality of nodes, using a second smart contract stored on the secondary blockchain network. The method further includes identifying by the second smart contract, one or more nodes of the plurality of nodes that are associated with the event, based on the received request. The method further includes receiving consent information from each node of the identified one or more nodes, by the second smart contract. The method further includes sending a response to the source blockchain network based on the received consent information from each node of the identified one or more nodes, by the second smart contract. The method further includes performing the event on the source blockchain network based on the response.

The above-described method may allow the consent mechanism of a transaction to be limited to a different set of nodes from that of the source blockchain network. As a result, the consent decisions made by individual nodes of the secondary, i.e. spin-off blockchain network are not revealed to the nodes of the source blockchain network. This can enhance data privacy of the consent mechanism. At the same time, the event is still performed by the source blockchain network, once the spin-off blockchain network has given a consensus to the event, such that the event data is securely stored in the source blockchain network. Consequently, the method may advantageously leverage on the immutable nature of blockchain to carry out an event such as a transaction, while having the ability to restrict the consent process to a selection of nodes.

According to an embodiment which may be combined with the above-described embodiment or with any below described further embodiment, each of the first smart contract and the second smart contract may have access to a private encryption key of each other.

According to an embodiment which may be combined with the above-described embodiment or with any below described further embodiment, the method may further include creating the secondary blockchain network in real-time based on the request.

According to an embodiment which may be combined with the above-described embodiment or with any below described further embodiment, the second smart contract may be stored on each node of the plurality of nodes of the secondary blockchain network.

According to an embodiment which may be combined with the above-described embodiment or with any below described further embodiment, the second smart contract may include one or more communicators (115₁ to 115ₙ), one or more smart contracts (117₁ to 117ₙ), and one of one or more consensus mechanisms (119₁ to 119ₙ).

According to an embodiment which may be combined with the above-described embodiment or with any below described further embodiment, the one or more smart contracts (117₁ to 117ₙ) may be configured to process the request for the event through the one of one or more communicators (115₁ to 115ₙ).

According to an embodiment which may be combined with the above-described embodiment or with any below described further embodiment, the one or more smart contracts (117₁ to 117ₙ) may be configured to identify the one or more nodes that are associated with the event.

According to an embodiment which may be combined with the above-described embodiment or with any below described further embodiment, the one or more smart contracts (117₁ to 117ₙ) may be configured to receive the consent information from each node of the identified one or more nodes using the one of one or more consensus mechanisms (119₁ to 119ₙ).

According to an embodiment which may be combined with the above-described embodiment or with any below described further embodiment, information of one or more events and corresponding one or more smart contracts (117₁ to 117ₙ) to be triggered for processing the request may be stored in each of the one or more communicators (115₁ to 115ₙ), wherein each of the one or more communicators (115₁ to 115ₙ) may be configured for receiving the request corresponding to one or more events.

According to an embodiment which may be combined with the above-described embodiment or with any below described further embodiment, the one of the one or more communicators (115₁ to 115ₙ) may identify the one of the one or more smart contracts (117ₗ to 117ₙ) based on the event.

According to an embodiment which may be combined with the above-described embodiment or with any below described further embodiment, the one or more nodes that are associated with the event may be identified by the one of one or more smart contracts (1171 to 117n) by matching one or more properties of the event with corresponding one or more properties in each of the one or more nodes.

According to an embodiment which may be combined with the above-described embodiment or with any below described further embodiment, the method may further include deploying one or more additional smart contracts in the secondary blockchain network 103 or updating the one of one or more smart contracts (117₁ to 117n) when the one of one or more smart contracts (117₁ to 117n) is outdated for processing the request or one or more updates are available for processing the request.

According to an embodiment, a multi-layered blockchain network may include a source blockchain network having a first smart contract stored thereon, and a secondary blockchain network including a plurality of nodes and having a second smart contract stored thereon. The first smart contract may be configured to send a request for an event, from the source blockchain network to the secondary blockchain network. The second smart contract may be configured to receive the request and update details of the request in each node of the plurality of nodes, and further configured to identify one or more nodes of the plurality of nodes that are associated with the event based on the received request. The second smart contract may be further configured to receive consent information from each node of the identified one or more nodes, and further configured to send a response to the source blockchain network based on the received consent information from each node of the identified one or more nodes. The source blockchain network may be configured to perform the event based on the response.

According to an embodiment which may be combined with the above-described embodiment or with any below described further embodiment, the source blockchain network may include a first plurality of nodes, while the secondary blockchain network may include a second plurality of nodes. The first plurality of nodes may be distinct from the second plurality of nodes. Alternatively, there may be an overlap between the first plurality of nodes and the second plurality of nodes, for example, the second plurality of nodes may be a subset of the first plurality of nodes.

The following examples described further technical aspects of the methods and multi-layer blockchain networks described above and shall not be interpreted as claims.

The following examples can additionally be combined with any of the methods and multi-layer blockchain networks as described above, any of the claims as originally filed.

Example 1 is a method for securely performing an event in a multi-layered blockchain network, the method including: identifying one of one or more smart contracts (117₁ to 117ₙ) configured to process a request corresponding to an event from a source blockchain network 101 through one of one or more communicators (115₁ to 115ₙ) of a secondary blockchain network 103 of an organization, wherein the one or more smart contracts (117₁ to 117ₙ) and the one or more communicators are present in each of one or more interconnected nodes in the secondary blockchain network 103; identifying, by the one of one or more smart contracts (117₁ to 117ₙ), one or more intended nodes, among the one or more interconnected nodes, associated with the event, for performing the action corresponding to the event; receiving, by the one of one or more smart contracts (117₁ to 117ₙ), consent information from each of the one or more intended nodes upon performing the action using one of one or more consensus mechanisms (119₁ to 119ₙ) of the secondary blockchain network 103; and providing, by the secondary blockchain network 103, a response to the request to the source blockchain network 101 based on the consent information for performing the event based on the response.

In example 2, the subject-matter of example 1 may further include: creating the secondary blockchain network 103 in real-time based on the event.

In example 3, the subject-matter of any preceding example may further include that the one of the one or more communicators (115₁ to 115ₙ) configured to act upon the request corresponding to the event is identified based on one of type of event and type of the source blockchain network 101.

In example 4, the subject-matter of any preceding example may further include that information of one or more events and corresponding one or more smart contracts (117₁ to 117ₙ) to be triggered for processing the request is stored in each of the one or more communicators (115₁ to 115ₙ), wherein each of the one or more communicators (115₁ to 115ₙ) are configured for receiving the request corresponding to one or more events.

In example 5, the subject-matter of any preceding example may further include that the one of the one or more communicators (115₁ to 115ₙ) identifies the one of the one or more smart contracts (117₁ to 117ₙ) based on the event.

In example 6, the subject-matter of example 1 may further include that the one or more intended nodes are identified by the one of one or more smart contracts (117₁ to 117ₙ) by matching one or more properties of the event with corresponding one or more properties in each of one or more interconnected nodes.

In example 7, the subject-matter of any preceding example may further include that the response is provided to the source blockchain network 101 by one of one or more nodes which received the event through the one of one or more smart contracts (117₁ to 117ₙ) or one of one or more other nodes in the secondary blockchain network 103.

In example 8, the subject-matter of any preceding example may further include: deploying one or more additional smart contracts in the secondary blockchain network 103 or updating the one of one or more smart contracts (117₁ to 117ₙ) when the one of one or more smart contracts (117₁ to 117ₙ) is outdated for processing the request or one or more updates are available for processing the request.

In example 9, the subject-matter of any preceding example may further include that each of the one or more interconnected nodes includes one or more smart contract contracts (117₁ to 117ₙ), one or more communicators (115₁ to 115ₙ) and one or more consensus mechanisms (119ₗ to 119ₙ).

Example 10 is a system for securely performing an event in a multi-layered blockchain network, the system including: one or more interconnected nodes, wherein each of the one or more interconnected nodes includes one or more smart contracts (117₁ to 117ₙ), one or more communicators (115₁ to 115ₙ) and one or more consensus mechanisms (119₁ to 119ₙ), wherein one of the one of one or one or more smart contracts (117₁ to 117ₙ) is identified for processing a request corresponding to an event from a source blockchain network 101 through one of the one or more communicators (115₁ to 115ₙ) and the one of the one or more smart contracts (117₁ to 117ₙ) is configured to: identify one or more intended nodes, among the one or more interconnected nodes, associated with the event, for performing the action corresponding to the event; receive consent information from each of the one or more intended nodes upon performing the action using one of one or more consensus mechanisms (119₁ to 119ₙ); and provide a response to the request to the source blockchain network 101 based on the consent information for performing the event based on the response.

In example 11, the subject-matter of any preceding example may further include that each of the one or more communicators (115₁ to 115ₙ) stores information of one or more events and corresponding one or more smart contracts (117₁ to 117ₙ) to be triggered for processing the request, wherein each of the one or more communicators (115₁ to 115ₙ) is configured for receiving the request corresponding to one or more events.

In example 12, the subject-matter of any preceding example may further include that the system identifies the one of the one or more communicators (115₁ to 115ₙ) for acting upon the request corresponding to the event based on one of type of event and type of the source blockchain network 101.

In example 13, the subject-matter of any preceding example may further include that the one of the one or more communicators (115₁ to 115ₙ) identifies the one of the one or more smart contracts (117₁ to 117ₙ) based on the event.

In example 14, the subject-matter of any preceding example may further include that the one of one or more smart contracts (117₁ to 117ₙ) identifies the one or more intended nodes by matching one or more properties of the event with corresponding one or more properties in each of one or more interconnected nodes.

In example 15, the subject-matter of any preceding example may further include that the one of one or more nodes which received the event through the one of one or more smart contracts (117₁ to 117ₙ) or one of one or more other nodes in the public blockchain network provides the response to the source blockchain network 101.

In example 16, the subj ect-matter of any preceding example may further include deploying one or more additional smart contracts in the secondary blockchain network 103 or updating the one of one or more smart contracts (117₁ to 117ₙ) when the one of one or more smart contracts (117₁ to 117ₙ) is outdated for processing the action or one or more updates are available for processing the request.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise. The enumerated listing of items does not imply that any or all the items are mutually exclusive, unless expressly specified otherwise.

The terms "a", "an" and "the" mean "one or more", unless expressly specified otherwise. A description of an embodiment with several components in communication with each other does not imply that all such components are required. On the contrary, a variety of optional components are described to illustrate the wide variety of possible embodiments of the invention.

When a single device or article is described herein, it will be clear that more than one device/article (whether they cooperate) may be used in place of a single device/article. Similarly, where more than one device or article is described herein (whether they cooperate), it will be clear that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

**Referral Numerals:**

| **Reference Number** | **Description** |
|---|---|
| 100 | Multilayered blockchain network |
| 101 | Source blockchain network |
| 102 | CSCL |
| 103 | Secondary blockchain network |
| 105 | Node 1 |
| 107 | Node 2 |
| 109 | Node 3 |
| 111 | Node n |
| 115₁ | C1 |
| 115₂ | C2 |
| 115ₙ | Cn |
| 117₁ | S1 |
| 117₂ | S2 |
| 117ₙ | Sn |
| 119₁ | M1 |
| 119₂ | M2 |
| 119ₙ | Mn |
| 201 | Wallet |
| 203 | MS |

## Claims

1. A computer-implemented method for performing an event in a multi-layered blockchain network (100), the method comprising:
sending a request for an event, from a source blockchain network (101) to a secondary blockchain network (103) comprising a plurality of nodes (105, 107, 109, 111), using a first smart contract stored on the source blockchain network (101);
receiving the request and updating details of the request in each node of the plurality of nodes (105, 107, 109, 111), using a second smart contract stored on the secondary blockchain network (103);
identifying by the second smart contract, one or more nodes of the plurality of nodes that are associated with the event, based on the received request;
receiving consent information from each node of the identified one or more nodes, by the second smart contract;
sending a response to the source blockchain network (101) based on the received consent information from each node of the identified one or more nodes, by the second smart contract; and
performing the event on the source blockchain network (101) based on the response.

2. The computer-implemented method of claim 1, wherein each of the first smart contract and the second smart contract has access to a private encryption key of each other.

3. The computer-implemented method of any one of claims 1 to 2, further comprising: creating the secondary blockchain network (103) in real-time based on the request.

4. The computer-implemented method of any one of claims 1 to 3, wherein the second smart contract is stored on each node of the plurality of nodes (105, 107, 109, 111) of the secondary blockchain network (103).

5. The computer-implemented method of any one of claims 1 to 4, wherein the second smart contract comprises one or more communicators (115₁ to 115ₙ), one or more smart contracts (117₁ to 117ₙ), and one of one or more consensus mechanisms (119₁ to 119ₙ).

6. The computer-implemented method of claim 5, wherein the one or more smart contracts (117₁ to 117ₙ) are configured to process the request for the event through the one of one or more communicators (115₁ to 115ₙ).

7. The computer-implemented method of claim 5 or claim 6, wherein the one or more smart contracts (117₁ to 117ₙ) are configured to identify the one or more nodes that are associated with the event.

8. The computer-implemented method of any one of claims 5 to 7, wherein the one or more smart contracts (117₁ to 117ₙ) are configured to receive the consent information from each node of the identified one or more nodes using the one of one or more consensus mechanisms (119₁ to 119ₙ).

9. The computer-implemented method of any one of claims 5 to 8, wherein information of one or more events and corresponding one or more smart contracts (117₁ to 117ₙ) to be triggered for processing the request is stored in each of the one or more communicators (115₁ to 115ₙ), wherein each of the one or more communicators (115₁ to 115ₙ) are configured for receiving the request corresponding to one or more events.

10. The computer-implemented method of any one of claims 5 to 9, wherein the one of the one or more communicators (115₁ to 115ₙ) identifies the one of the one or more smart contracts (117₁ to 117ₙ) based on the event.

11. The computer-implemented method of any one of claims 5 to 10, wherein the one or more nodes that are associated with the event are identified by the one of one or more smart contracts (117₁ to 117ₙ) by matching one or more properties of the event with corresponding one or more properties in each of the one or more nodes.

12. The computer-implemented method of any one of claims 5 to 11, further comprising:
deploying one or more additional smart contracts in the secondary blockchain network (103) or updating the one of one or more smart contracts (117₁ to 117ₙ) when the one of one or more smart contracts (117₁ to 117ₙ) is outdated for processing the request or one or more updates are available for processing the request.

13. A multi-layered blockchain network (100) comprising:
a source blockchain network (101) having a first smart contract stored thereon; and
a secondary blockchain network (103) comprising a plurality of nodes (105, 107, 109, 111) and having a second smart contract stored thereon,
wherein the first smart contract is configured to send a request for an event, from the source blockchain network (101) to the secondary blockchain network (103),
wherein the second smart contract is configured to receive the request and update details of the request in each node of the plurality of nodes (105, 107, 109, 111), and further configured to identify one or more nodes of the plurality of nodes (105, 107, 109, 111)that are associated with the event based on the received request,
wherein the second smart contract is further configured to receive consent information from each node of the identified one or more nodes, and further configured to send a response to the source blockchain network (101) based on the received consent information from each node of the identified one or more nodes, and
wherein the source blockchain network (101) is configured to perform the event based on the response.
